# FASCICULE DE BREVET EUROPEEN

(11) **EP 2 637 760 B1**
(45) Date de publication et mention de la délivrance du brevet: **03.02.2016**
(21) Numéro de dépôt: 11799741.1
(22) Date de dépôt: 31.10.2011
(51) Int. Cl.: B01D 15/18, B01D 15/24, G01N 30/46

(54) **PROCEDE DE SEPARATION PAR CHROMATOGRAPHIE CONTINUE A HAUT DEBIT, ET DISPOSITIF CORRESPONDANT**
TRENNVERFAHREN MITTELS KONTINUIERLICHER CHROMATOGRAPHIE MIT HOHEM DURCHFLUSS UND ENTSPRECHENDE VORRICHTUNG
SEPARATION PROCESS BY MEANS OF HIGH FLOW CONTINUOUS CHROMATOGRAPHY, AND CORRESPONDING DEVICE

(30) Priorité: 09.11.2010 FR 1004383
(43) Date de publication de la demande: 18.09.2013
(73) Titulaire: Fauquet, Nicolas, 95320 Saint Leu La Foret (FR)
(72) Inventeur: Fauquet, Nicolas, 95320 Saint Leu La Foret (FR)
(74) Mandataire: Ermeneux, Bertrand
(86) Numéro de dépôt international: PCT/FR2011/052549
(87) Numéro de publication internationale: WO 2012/062985

(56) Documents cités:
- WO-A1-03/021251
- DE-B- 1 121 591
- US-A- 3 248 929
- US-A1- 2007 178 581
- US-A1- 2009 320 560
- KALJURAND M ET AL: "Application of random and regular input in analytical separation methods: A critical insight", CHEMOMETRICS AND INTELLIGENT LABORATORY SYSTEMS, ELSEVIER SCIENCE PUBLISHERS B.V. AMSTERDAM, NL, vol. 79, no. 1-2, 28 octobre 2005 (2005-10-28), pages 65-72, XP025287611, ISSN: 0169-7439, DOI: DOI:10.1016/J.CHEMOLAB.2005.04.003 [extrait le 2005-10-28]

## Description

La présente invention concerne un procédé de séparation des fractions d'un mélange par chromatographie en phase liquide, encore appelée par raccourci chromatographie liquide.

Il convient de noter que dans le cadre de l'invention, le terme chromatographie liquide couvre des techniques variées, telles que la chromatographie en phase liquide à haute performance, la chromatographie en phase liquide à basse pression la chromatographie en phase liquide en colonne ouverte, la chromatographie aqueuse subcritique, la chromatographie aqueuse supercritique, la chromatographie de partage centrifuge (CPC) ...

La chromatographie en phase liquide est une méthode de séparation des constituants d'un mélange. Celle-ci utilise les différences d'affinités des différents constituants du mélange pour un même système au travers duquel ils percolent.

Ce système est composé d'une phase stationnaire et d'une phase mobile qui peuvent être de nature très variable.

Ce principe est très largement utilisé notamment dans les industries et laboratoires pour permettre la purification de différents produits d'intérêt ou éliminer spécifiquement une impureté.

Les différents procédés, notamment employés lors du traitement de quantités importantes, se heurtent au caractère discontinu de ces procédés. Une réponse fut l'utilisation des systèmes *batch,* lit mobile simulé, utilisation de différentes colonnes en séries ou en parallèles,... Ces procédés connus présentent l'inconvénient d'être très complexes en termes de branchements, de pompes, de vannes car ils nécessitent le déplacement des points d'injections dans les différentes colonnes mises en oeuvre, ou le déplacement des sens de flux dans les colonnes.

Une autre approche connue comporte l'utilisation de gradients, elle permet de diminuer le temps séparant deux injections dans la même colonne, mais présente entre autre, les inconvénients de nécessiter une phase d'équilibrage plus importante entre deux injections et l'utilisation de mélanges de solvants plus complexes.

On connait également, dans le domaine connexe de la chromatographie en phase gazeuse, les documents DE-B-1121591 et US-A-3248929 qui décrivent des procédés de séparation des fractions d'un mélange mettant en oeuvre une unique colonne de chromatographie.

L'invention a pour but d'obtenir un procédé simple de séparation de fractions d'un mélange. Il ne nécessite pas nécessairement, dans son procédé fondamental l'utilisation de gradient, ni de déplacement des points d'injections, ni de changement de sens de flux de solvant ni d'attendre plus de quelques minutes entre deux injections.

Cette invention permet notamment de diminuer la taille des colonnes utilisées, d'augmenter leurs rendements, de limiter la mise au point des différents systèmes éluants et de limiter la consommation de solvant. De très nombreux autres avantages apparaitront à la lecture des paragraphes suivants.

L'invention se rapporte à un procédé de séparation de fractions d'un mélange à séparer par chromatographie liquide.

À cette fin il est proposé un procédé comprenant les étapes de :
- Injections multiples du mélange à séparer : les injections se succèdent après des intervalles de temps A dans une colonne de chromatographie,
- soutirages multiples : le soutirage des fractions de cette colonne se succèdent après des intervalles de temps A, générant un éluat enrichi en fraction d'intérêt, formé à partir d'au moins une desdites fractions soutirées,
- injections multiples de l'éluat recueilli précédemment : les injections se succèdent après des intervalles de temps B dans une seconde colonne de chromatographie,
- soutirages multiples : les soutirages des fractions de cette seconde colonne se succèdent après des intervalles de temps B.

Il convient de noter que, dans le cadre de l'invention, le terme "éluat" fait référence à un produit enrichi comprenant au moins une desdites fractions. Le terme "éluat" ne doit donc pas être limité au résultat de l'élution.

Notamment, l'éluat recueilli peut être formé d'une seule fraction ou de plusieurs fractions. Par ailleurs, le nombre de fractions formant l'éluat peut varier au cours du temps.

Dans un mode de réalisation particulier de l'invention, l'éluat est formé de l'ensemble des fractions soutirées de la première colonne.

Dans un autre mode de réalisation particulier de l'invention, l'éluat recueilli peut être obtenu en sélectionnant certaines des fractions soutirées de la première colonne.

Une variante de ce procédé est de fixer A et B à des valeurs telles que les injections successives se produisent avant même que le produit d'intérêt ne commence à être élué.

Une variante de ce procédé est de fixer A et B à des valeurs fixes au cours du temps.

Une variante de ce procédé est de fixer A et B à des valeurs fixes au cours du temps, déterminées telles que A et B ne soient pas des multiples entiers l'un de l'autre.

Une variante de ce procédé est le changement des valeurs de A et/ou de B entre chaque injection.

Une variante de ce procédé est de changer les valeurs de A et/ou de B au cours du procédé suivant un protocole commun aux étapes d'injections et de soutirages d'une même colonne.

Une variante de ce procédé est de donner à A et B des valeurs telles qu'ils ne soient pas des multiples entiers l'un de l'autre.

Une variante de ce procédé est la réutilisation de la première colonne à la place de la seconde.

Dans un mode de réalisation particulier de l'invention, il peut être prévu de concentrer l'éluat généré avant de l'injecter dans la seconde colonne.

À cet effet, un évaporateur rotatif, par exemple de la gamme Rotavapor(marque déposée), et/ou un dispositif, tel qu'une cartouche ou une colonne, apte à assurer la séquestration (par exemple par adsorption) puis le relargage des produits d'intérêts, peuvent être utilisés.

Une variante de ce procédé est l'adjonction d'un détecteur en série ou en parallèle des dispositifs de soutirage.

Une variante de ce procédé est l'utilisation d'une seconde colonne dont la section approche un multiple remarquable de la section de la première colonne.

Une variante de ce procédé est la réinjection de fractions appauvries en produit d'intérêt dans le dispositif.

Une variante de ce procédé est la réinjection de fractions enrichies en produit d'intérêt dans le dispositif.

Une variante de ce procédé est que le produit élué est un produit à éliminer du mélange.

Une variante de ce procédé est l'adjonction de vannes ou de dispositifs permettant les purges, le nettoyage ou le contrôle des pressions dans les colonnes.

Une variante de ce procédé est l'utilisation en boucle de ce procédé.

Une variante de ce procédé est d'opérer les injections du mélange à séparer de façon cyclique.

Une variante de ce procédé est l'utilisation de montages de plusieurs colonnes à la place de la première et/ou de la seconde colonne.

Une variante de ce procédé est l'utilisation d'un système d'élution différent dans la deuxième colonne.

Une variante de ce procédé est l'utilisation d'une différence de pression entre l'entrée et la sortie du dispositif.

Il est par ailleurs proposé d'utiliser ce procédé pour la séparation ou purification des molécules de synthèse, produits naturels, protéines, immunoglobuline, peptides, ions,...

Un des principaux intérêts de ce procédé est qu'il permet d'injecter plusieurs fois le mélange à séparer (appelés « quantièmes » ou « quanta » dans la suite du texte) dans la même colonne avant même que les fractions d'intérêts ne commencent à être éluées. Par ailleurs, contrairement à d'autres procédés, cette invention tolère une superposition des molécules en cours de migration injectées à des temps différents.

Les sites d'injections et de soutirages ne sont pas nécessairement déplacés au cours du procédé.

L'invention concerne également un dispositif de séparation de fractions de mélange pour la mise en oeuvre d'un quelconque des procédés de séparation de fractions d'un mélange décrits ci-dessus.

Selon l'invention, un tel dispositif de séparation de fractions de mélange comprend :
- au moins une colonne de chromatographie ;
- des moyens de soutirage d'une pluralité de fractions de ladite colonne de chromatographie, à intervalles de temps contrôlés A et/ou B ;
- des moyens d'injection dans ladite colonne de chromatographie d'un mélange à intervalles de temps contrôlés A, et/ou d'un éluat à intervalles de temps contrôlés B, ledit éluat étant formé à partir d'au moins une desdites fractions soutirées ;
- des moyens de recueil de ladite pluralité de fractions soutirées de ladite colonne de chromatographie ;
- des moyens de transfert desdites fractions soutirées desdits moyens de recueil vers lesdits moyens d'injection.

Les moyens de soutirage peuvent notamment comprendre une ou plusieurs vannes magnétiques, et les moyens d'injection peuvent comprendre par exemple un ou plusieurs injecteurs pourvus d'échantillonneurs pilotés automatiquement par un terminal informatique.

Par ailleurs, le recueil des fractions peut être effectué dans tout récipient, cartouche ou colonne connu(e), de forme et de contenance convenable. Dans un mode de réalisation avantageux de l'invention, ladite cartouche ou ladite colonne peut être configurée de sorte à permettre de piéger le produit d'intérêt pour ensuite le relarguer, notamment sous l'action d'un solvant, dans le but de concentrer l'éluat généré.

Dans un mode de réalisation particulier de ce dispositif de séparation de fractions de mélange, le transfert des fractions soutirées peut être réalisé par gravité et/ou à l'aide d'une pompe.

En outre, il peut être envisagé, dans au moins un mode de réalisation particulier de l'invention, qu'un tel dispositif de séparation comprenne une conduite de dérivation, ou "split", disposée en parallèle des moyens de soutirage des fractions, connectée à un spectromètre de masse, afin de détecter à partir de quel instant le produit d'intérêt atteint le niveau des moyens de soutirage.

Préférentiellement, un tel dispositif de séparation de fractions de mélange comprend des moyens de synchronisation desdites injections de mélange et d'éluat dans la ou lesdites colonnes de chromatographie.

Dans au moins un mode de réalisation particulier de l'invention, le dispositif de séparation comprend une colonne de chromatographie dans laquelle ledit mélange est destiné à être injecté, et une colonne de chromatographie dans laquelle lesdites fractions recueillies sont destinées à être injectées, solidarisées par au moins un conduit de transfert desdites fractions.

Selon un aspect particulier de l'invention, ledit dispositif de séparation de fractions de mélange comprend des moyens de concentration des fractions formant un éluat soutirées de ladite ou d'une desdites colonnes de chromatographie.

Les moyens de concentration peuvent par exemple comprendre un ou plusieurs évaporateurs rotatifs et/ou au moins un dispositif, tel qu'une colonne ou une cartouche par exemple, apte à piéger (notamment par adsorption) le produit d'intérêt pour ensuite le relarguer, notamment sous l'action d'un solvant éluant.

De façon préférentielle, ledit dispositif de séparation de fractions de mélange comprend des moyens de commande automatique desdits moyens d'injection et/ou desdits moyens de soutirage et/ou desdits moyens de transfert.

Ces moyens de commande peuvent, par exemple, comprendre au moins un automate programmable.

En outre, on peut prévoir une application logicielle permettant de prédire les corrections à apporter aux valeurs des intervalles de temps A et/ou B, en cas de dérive d'une durée d'élution au travers de la colonne.

Dans un mode de réalisation particulier de l'invention, une étape préalable d'optimisation des valeurs des intervalles de temps A et B, de leurs variations au cours du temps, et des durées d'injection, en fonction de résultats d'une phase de calibrage du dispositif de séparation peut également être envisagée. Un produit programme d'ordinateur téléchargeable depuis un réseau de communication et/ou enregistré sur un support lisible par ordinateur et/ou exécutable par un processeur comprenant des instructions de code de programme pour l'exécution de cette étape d'optimisation, lorsque ledit programme est exécuté par un ordinateur, peut ainsi être prévu.

D'autres avantages de l'invention apparaîtront à l'étude des descriptions détaillées fournies plus loin.

Le procédé général de l'invention est de procéder à de multiples injections du mélange à séparer dans une colonne, sans forcément attendre que le produit d'intérêt ne soit élué, ni même d'attendre que le groupe de molécules injecté précédemment ne se superpose plus avec celui injecté ensuite.

Ces multiples injections respectent un premier protocole qui défini la valeur de A et ses variations au cours du temps, A est définis comme l'intervalle de temps entre deux injections successives celui-ci peut prendre plusieurs valeurs Δt.

Les fractions enrichies en produit d'intérêt sont ensuite recueillies grâce à un dispositif de soutirage en fin de colonne qui respecte le même protocole que celui d'injection.

L'éluat obtenu contient donc le produit d'intérêt enrichi par rapport au mélange initial. Mais celui-ci est toujours en mélange avec des impuretés issues d'autres injections qui migrent dans la colonne.

Ces impuretés qui sont co-éluées avec le produit d'intérêt dépendent directement du protocole employé. (Ainsi, pour la variante dont le protocole définit A comme une valeur fixe au cours du procédé, les impuretés co-éluées présentent un temps de rétention égale à celui du produit d'intérêt plus ou moins les multiples entiers de la valeur de A.)

Dans un second temps en renouvelant l'opération sur l'éluat recueilli précédemment avec un protocole d'injection et de soutirage différent, les impuretés se retrouvent éliminées :
De multiples injections sont à nouveau effectuées en respectant un nouveau protocole qui définit la valeur de B et ses variations au cours du temps, B est définis comme l'intervalle de temps entre deux injections, celui-ci peut prendre plusieurs valeurs Δt.

Les fractions purifiées sont ensuite recueillies grâce à un dispositif de soutirage en fin de colonne qui respecte ce même nouveau protocole.

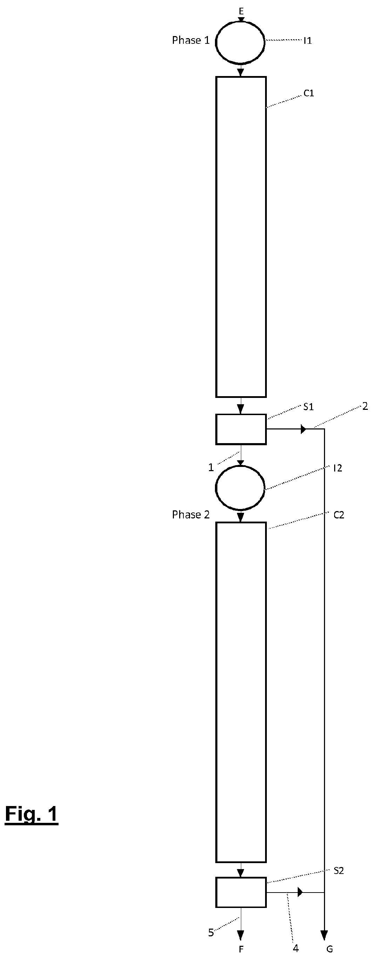

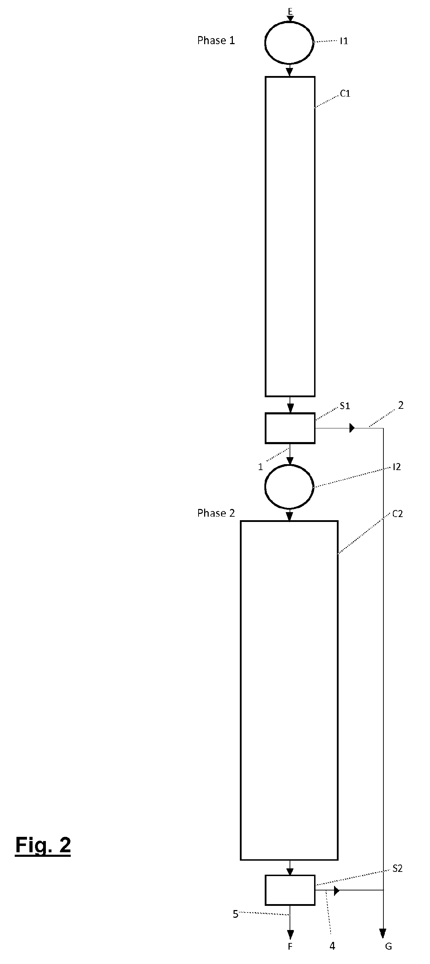

Le procédé inventé est mis en place dans un dispositif fonctionnant en deux phases, ces deux phases peuvent être effectuées sur la même colonne à deux instants différents (figure2), ou sur deux colonnes de façon simultanée (figure 1).
- Phase 1 : Le dispositif est composé d'un injecteur (11), d'une colonne de chromatographie (C1) et d'un dispositif de recueil des fractions (S1). Cette partie du dispositif assure les fonctions d'injections multiples du mélange à séparer dans le dispositif et de recueil des fractions enrichies en respectant un protocole 1 défini. Ce protocole 1 impose le rythme commun des injections et des soutirages de la phase 1. Le pilotage des injections et des soutirages selon le rythme imposé par le protocole 1 est avantageusement assuré via un logiciel de gestion du fonctionnement de la colonne de chromatographie (non représenté sur les figures 1 et 2). Les injections se succèdent après des intervalles de temps A dont les variations sont définies dans le protocole 1. Les multiples soutirages du produit d'intérêt se succèdent ensuite après des intervalles de temps A dont les variations suivent le même protocole 1 que celui des injections. Cela conduit à la formation d'un éluat, enrichi en fraction d'intérêt.
- Phase 2 : Le dispositif est composé d'un injecteur (I2), d'une colonne (C2) de chromatographie et d'un dispositif de recueil des fractions (S2). Cette partie du dispositif assure les fonctions d'injections de l'éluat précédemment obtenu dans le dispositif et de recueil des fractions purifiées en respectant un protocole 2 défini. Ce protocole 2 impose le rythme commun des injections et des soutirages de la phase 2, Le pilotage des injections et des soutirages selon le rythme imposé par le protocole 2 est avantageusement assuré via un logiciel de gestion du fonctionnement de la colonne de chromatographie (non représenté sur les figures 1 et 2). Les injections se succèdent après des intervalles de temps B dont les variations sont définies dans le protocole 2. Les multiples soutirages du produit d'intérêt se succèdent ensuite après des intervalles de temps B dont les variations suivent le même protocole 2 que celui des injections.

Par la suite nous désignerons par « fréquence d'injection », notée Δt les valeurs prise par A ou B, les intervalles de temps entre deux injections successives.

La figure 1 illustre un fonctionnement du procédé parmi d'autres :
(11) désigne l'injecteur numéro 1, celui-ci injecte le mélange à séparer en respectant entre chaque injection des temps A dont les variations sont déterminées par un protocole défini (protocole 1).
(C1) désigne la première colonne de chromatographie dans laquelle la séparation du produit d'intérêt est assurée.
S1 désigne le dispositif de soutirage numéro 1, celui-ci recueille les fractions d'intérêt de la colonne (C1) en respectant le même protocole 1 que celui des injections (1), celles-ci sont orientées vers l'injecteur (I2). En dehors des périodes d'élutions du produit d'intérêt, le flux de solvant contenant les impuretés à éliminer (2) est orienté vers le collecteur des fractions non valorisables.
(12) désigne l'injecteur numéro 2, celui-ci collecte les fractions d'intérêt recueillies par (S1) et les injecte dans la colonne (C2) en respectant un second protocole (protocole 2) qui fixe les variations de la valeur de B au cours du temps.
(C2) désigne la deuxième colonne de chromatographie dans laquelle la séparation du produit d'intérêt est assurée.
(S2) désigne le dispositif de soutirage numéro 2, celui-ci recueille les fractions d'intérêt de la colonne (C2) en respectant le même protocole 2 que celui des injections (5). En dehors des périodes d'élutions du produit d'intérêt, le flux de solvant contenant les impuretés à éliminer (4) est orienté vers le collecteur des fractions non valorisables.
Les flèches représentent le flux de solvant.
Le point (E) désigne l'entrée du mélange à purifier, le point (F) le lieu de collecte de la fraction purifiée et le point (G) le collecteur à fractions non valorisables.

La Figure 2 représente une variante du procédé selon laquelle la deuxième colonne est différente de la première, celle-ci peut notamment comporter des dimensions supérieures ou inférieures à la première ou utiliser un système différent d'élution, ou de phase solide.
Dans cette variante, (11) désigne l'injecteur numéro 1, celui-ci injecte le mélange à séparer en respectant entre chaque injection des temps A qui sont déterminés par un premier protocole défini (protocole 1).
(C1) désigne la première colonne de chromatographie dans laquelle la séparation du produit d'intérêt est assurée.
(S1) désigne le dispositif de soutirage numéro 1, celui-ci recueille les fractions d'intérêt de la colonne (C1) en respectant le rythme fixé par le protocole 1 (1). Ces fractions d'intérêt sont orientées vers l'injecteur (I2). En dehors des périodes d'élutions du produit d'intérêt, le flux de solvant contenant les impuretés à éliminer (2) est orienté vers le collecteur des fractions non valorisables.
(12) désigne l'injecteur numéro 2, celui-ci collecte les fractions d'intérêt recueillies par (S1) et les injecte dans la colonne (C2) en respectant un second protocole (protocole 2) qui fixe les variations de la valeur de B au cours du temps.
(C2) désigne la deuxième colonne de chromatographie dans laquelle la séparation du produit d'intérêt est assurée.
(S2) désigne le dispositif de soutirage numéro 2, celui-ci recueille les fractions d'intérêt de la colonne (C2) en respectant le même protocole 2 que celui des injections (5). En dehors des périodes d'élutions du produit d'intérêt, le flux de solvant contenant les impuretés à éliminer (4) est orienté vers le collecteur des fractions non valorisables.
Les flèches représentent le flux de solvant.
Le point (E) désigne l'entrée du mélange à purifier, le point (F) le lieu de collecte de la fraction purifiée et le point (G) le collecteur à fractions non valorisables.

Il est à noter l'intérêt de cette variante lorsque la section de la seconde colonne approche au minimum de B/A le multiple de la section de la première colonne

Cela permet en effet de conserver un débit de matière constant : dans la deuxième colonne les injections sont de B/A fois moins fréquentes que dans la première colonne, la deuxième colonne peut donc avoir un débit plus faible que la première qui l'alimente. Pour éviter que les capacités de stockage de l'injecteur (12) ne soient dépassées, il peut être nécessaire d'augmenter de B/A le volume injecté dans la seconde colonne. Notamment en augmentant de B/A la section de la seconde colonne.
Il est également possible, dans cette variante du dispositif, de modifier les conditions d'élution dans cette seconde colonne pour modifier la différence de temps de rétention entre les impuretés et le produit d'intérêt, ceci afin qu'elles ne soient plus d'un multiple entier de la fréquence d'injection, par exemple.

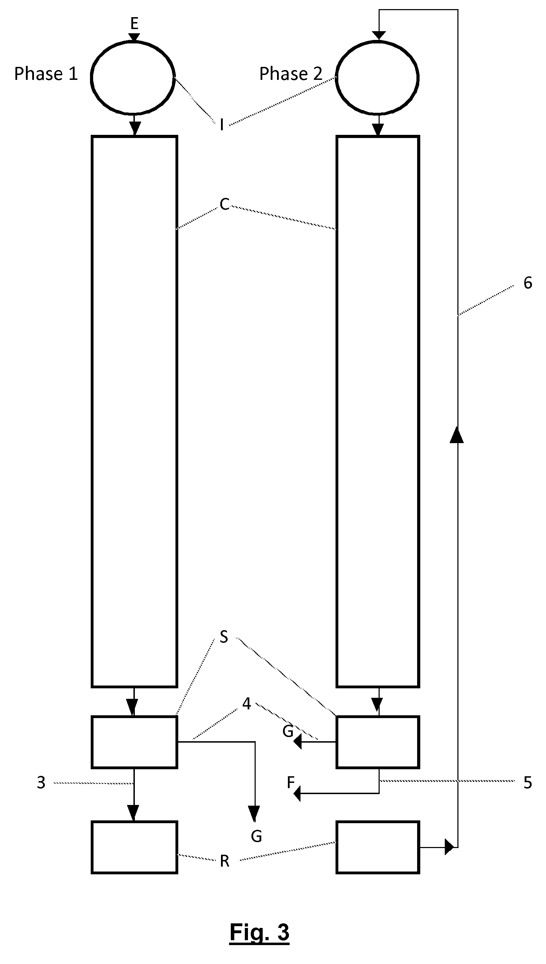

La Figure 3 représente une variante du procédé selon laquelle la première colonne et la seconde colonne sont les mêmes.
Dans ce cas (I) désigne l'injecteur, celui-ci injecte le mélange à séparer en respectant entre chaque injection des temps A (phase 1) puis B (phase 2) dont les variations sont déterminées, comme précédemment, par un protocole défini (protocole 1) lors de la phase 1 puis par un second protocole (protocole 2) lors de la phase 2.
(C) désigne la colonne de chromatographie dans laquelle la séparation du produit d'intérêt est assurée.
(S) désigne le dispositif de soutirage, celui-ci recueille les fractions d'intérêt de la colonne (C) selon le protocole 1 lors de la phase 1 puis selon le protocole 2 lors de la phase 2 (1), celles-ci sont orientées vers le réservoir lors de la première phase (3) et vers le collecteur de la fraction purifiée lors de la phase 2 (5). En dehors des périodes d'élution du produit d'intérêt, le flux de solvant contenant les impuretés à éliminer (4) est orienté vers le collecteur des fractions non valorisables.
Les flèches représentent le flux de solvant.
Le point (E) désigne l'entrée du mélange à purifier, le point (F) le lieu de collecte de la fraction purifiée, le point (G) le collecteur à fractions non valorisables et (R) le réservoir contenant le mélange des fractions d'intérêt soutirées lors de la première phase qui alimente l'injecteur lors de la phase 2 (6).

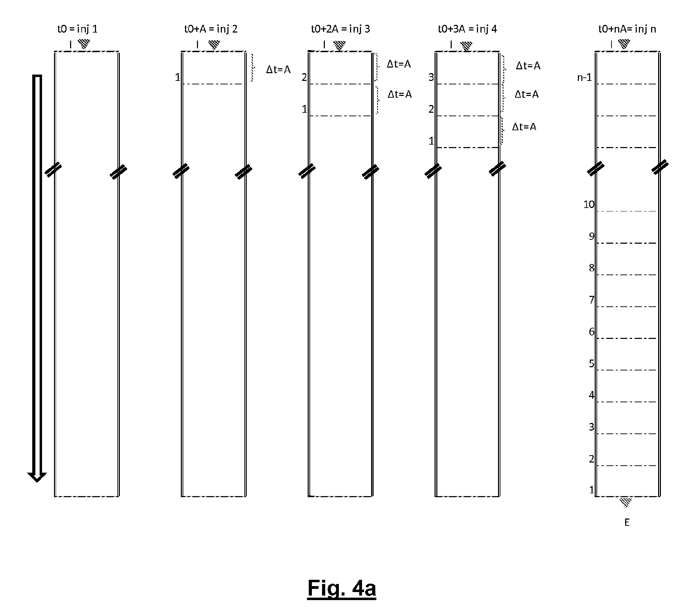

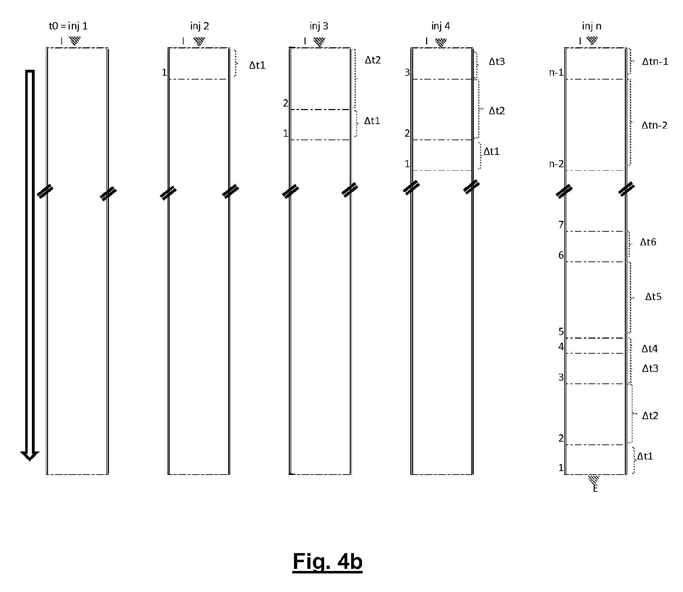

Les figures 4a et 4b représentent à différents instants le contenu de la première colonne de chromatographie de l'instant t0 à l'instant t0 + nA, où t0 représente le temps auquel a eu lieu la première injection et n représente le nombre d'injections nécessaires à effectuer pour injecter la totalité du mélange à séparer dans la colonne. A désigne les intervalles de temps entre deux injections.

La figure 4a représente la variante selon laquelle A est fixe au cours du temps. La figure 4b représente une variante selon laquelle A n'est pas fixe au cours du temps et est déterminé pour chaque injection par un protocole commun aux injections et soutirages.
La flèche verticale de gauche représente le flux de solvant dans la colonne.
(I) représente le site d'injection dans la colonne, et (E) le site d'élution.
Les traits en pointillés numérotés de (1) à (n-1) représentent le produit d'intérêt en cours de migration dans la colonne. On observe sur ces figures qu'après chaque injection espacée de A, une nouvelle injection de mélange à purifier a lieu, celle-ci se produit sans pour autant attendre que le produit d'intérêt issu de l'injection précédente ne soit élué de la colonne, ou même séparé d'une impureté en cours de migration.

À un même moment plusieurs quanta du mélange à séparer peuvent donc être mis à migrer dans la même colonne avec un espacement régulier de Δt = A pour la figure 4a et des espacements Δt variables dans la figure 4b.

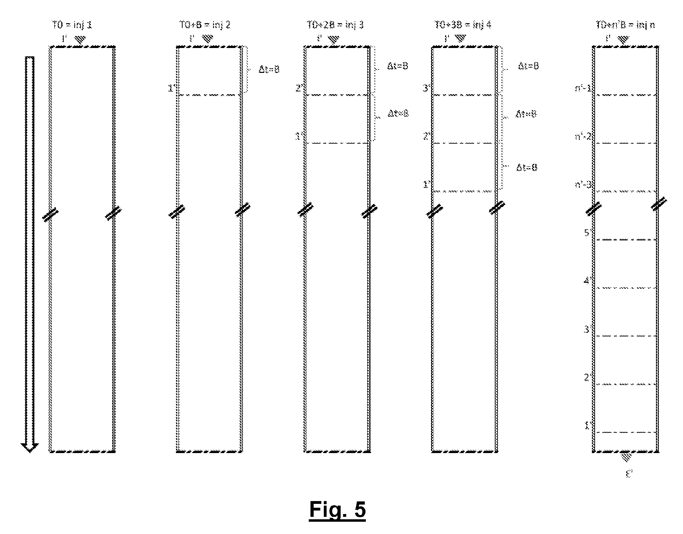

La figure 5 représente à différents instants le contenu de la deuxième colonne de chromatographie de T0 à T0 + n'B, où (T0) représente le temps auquel à eu lieu la première injection et (n') représente le nombre d'injections nécessaires à effectuer pour injecter dans la colonne la totalité des fractions d'intérêt obtenues précédemment. B désigne les intervalles de temps entre deux injections, ils sont dans l'illustration de cette variante, définit par un protocole qui détermine B comme une valeur fixe au cours du temps.
La flèche verticale de gauche représente le flux de solvant dans la colonne.
(I') représente le site d'injection dans la colonne, et (E') le site d'élution.
Les traits en pointillés numérotés de (1) à (n'-1) représentent le produit d'intérêt en cours de migration dans la colonne. On observe sur cette figure qu'après chaque injection espacée de B une nouvelle injection de mélange à purifier a lieu, celle-ci se produit sans pour autant attendre que le produit d'intérêt issu de l'injection précédente ne soit élué de la colonne.
A un même moment plusieurs quanta du mélange à séparer peuvent donc être mis à migrer dans la même colonne avec un espacement régulier de Δt = B (pour un protocole fixant B comme fixe au cours du temps), ou variable (pour un protocole fixant les différentes valeurs de Δt à chaque instant).

Dans ces variantes illustrées par la figure 4a, la purification est obtenue par le fait que les impuretés, co-éluées avec le produit d'intérêt toutes les A minutes lors de la première phase, ne sont plus soutirés en même temps que le produit d'intérêt dans une seconde phase (par exemple celle illustrée par la figure 5). Les fréquences d'injection et de recueil des fractions d'intérêt étant différentes d'une phase à l'autre (protocole 1 et 2 différents) :
Ainsi, en sortie de première colonne, le produit d'intérêt à isoler ou à purifier est élué aux temps de rétention (tr) du produit, puis tr + A mn, tr + 2A mn, tr + 3A mn,... tr + nA mn.

En ne recueillant que ces fractions d'intérêt avec une périodicité A, il est éliminé une grande partie des impuretés du mélange. A ce stade du procédé il ne persiste en mélange avec le produit d'intérêt recueilli, que les impuretés issues d'injections précédentes ou suivantes. Ces impuretés présentent des temps de rétention leur ayant permis d'être éluées lors d'une phase de soutirage de fractions d'intérêt, donc d'un multiple de A minutes depuis le temps de rétention du produit d'intérêt.

En injectant toutes les B minutes (avec B ayant une valeur différente de A et qui n'est pas un multiple de A) ce recueil d'éluats dans la même colonne, il est éliminé les impuretés qui co-éluaient avec les produits d'intérêt dans la première phase.

Effectivement dans cette seconde phase les impuretés migrent toujours avec des tr équivalent à tr+A mn, tr + 2A mn,... tr + nA mn cependant le produit d'intérêt à isoler ou à purifier est élué aux temps de rétention du produit tr, puis tr + B mn, tr + 2B mn, tr + 3B mn,... tr + nB mn.

Le soutirage ne se produit plus aux mêmes temps pour les impuretés : éluées à tr + A mn, tr+ 2A mn, tr + 3A mn,... tr + nA mn ; et pour le produit d'intérêt élué à tr + B mn, tr + 2B mn,... tr + n'B mn. Cela induit donc un décalage entre l'élution des pics d'impuretés et des produits d'intérêt.

La purification obtenue grâce à ce procédé, et illustré dans cette variante est garantie par la modification des fréquences d'injections entre la seconde et la première phase du procédé.

Une autre variante de ce procédé, représentée sur la figure 4b est de procéder à des injections entre lesquelles A n'est pas constant à l'intérieur d'une même phase, A peut alors prendre plusieurs valeurs Δt. Les variations de A respectent un programme de variations de la valeur de Δt commun aux phases d'injections et de soutirages dans une même phase (protocole 1).

On voit sur cette figure que A prend successivement les valeurs Δt1, Δt2, Δt3, et ainsi de suite. Le soutirage se produit dans ce cas en respectant successivement les intervalles de temps Δt1, Δt2, Δt3, et ainsi de suite.

La purification, est assurée dans ce cas, par le changement de protocole entre la phase 1 (protocole 1) et la phase 2 (protocole 2).

Une autre variante non-représentée sur les figures consiste à placer en parallèle ou en série des dispositifs de soutirage un ou des détecteurs.

Le dispositif inventé et ces variantes permettent donc d'injecter toutes les A minutes n fois le mélange à séparer dans la même colonne sans devoir attendre que le produit d'intérêt ne soit élué.

L'intérêt de cette invention est de pouvoir séparer efficacement et à grande échelle des composants d'un mélange en multipliant le rendement d'une seule colonne par plusieurs facteurs. En effet il permet d'injecter dans une colonne de chromatographie de très nombreuses fois le mélange à séparer avant même que le produit d'intérêt ne commence à être élué, sans même attendre qu'une séparation efficace ne soit obtenue avec des impuretés issues d'autres injections.

Ce procédé permet d'atteindre des performances de chromatographie très importantes avec un matériel et des investissements beaucoup plus faibles, de limiter l'utilisation de solvant dont l'élimination est par ailleurs souvent coûteuse et de limiter le coût des études de transpositions d'échelles.

### Exemple :

Dans cet exemple qui ne sert qu'à illustrer un fonctionnement du procédé inventé parmi d'autres, nous nous limiterons à n'expliciter que le procédé lorsqu'il est appliqué à une chromatographie liquide dans une colonne de chromatographie. Les figures utilisées pour illustrer cet exemple ne font références qu'aux étapes citées en exemple, elles ne sont données qu'à titre d'exemple et ne sont pas limitatives.

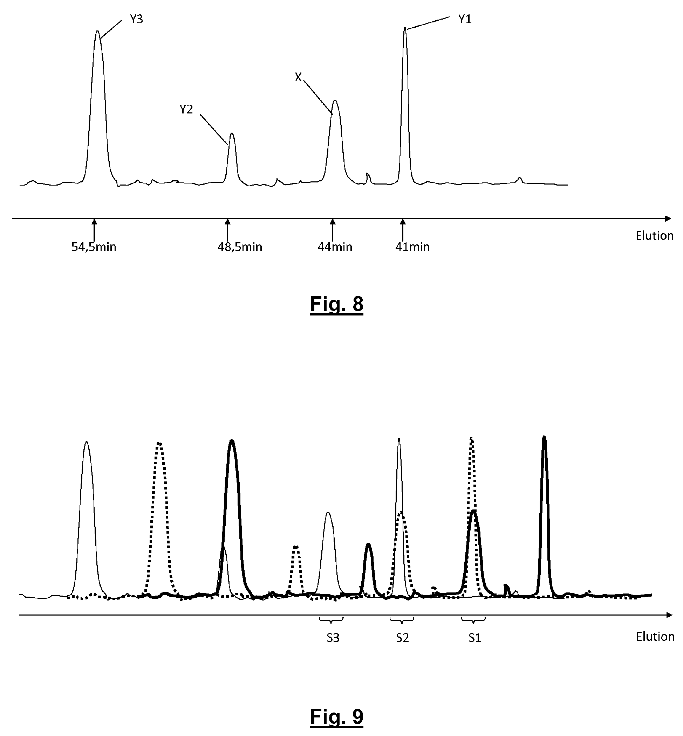

La figure 8 représente une partie du chromatogramme du mélange à séparer.

Nous prendrons ici à titre d'exemple la séparation d'un mélange dont, on cherche à purifier un produit d'intérêt (X) de ses impuretés, parmi lesquelles (Y1), (Y2) et (Y3) (figure 8). Le temps de rétention du produit (X) d'intérêt est de 44 mn celui de (Y1) est de 41 mn, celui de (Y2) est de 48,5 mn et celui de (Y3) de 54,5 mn.

Nous prendrons à titre d'exemple les protocoles selon lesquels A et B sont fixes au cours du procédé, avec A = 3 mn et B = 5 mn et utiliserons la même colonne dans les deux principales séquences du procédé par soucis de compréhension.

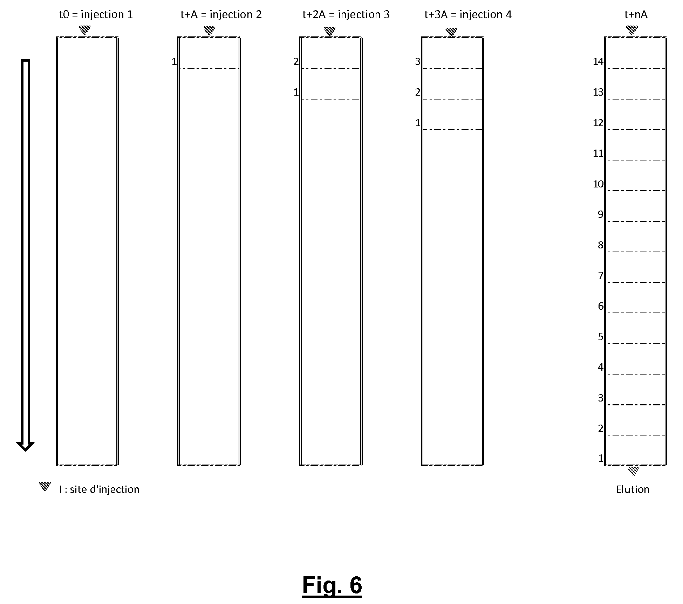

Phase 1 : (figure 6) au temps t0, une partie du mélange à séparer est injecté au point (I) de la colonne dont le flux de solvant est symbolisé par la flèche verticale de gauche. Au temps t0 + A, soit 3 minutes plus tard dans notre exemple, nous injectons de la même façon une seconde partie du mélange à séparer. Cette injection a lieu au même point (I) que précédemment.

Au temps t0 + 2A, soit encore 3 minutes plus tard dans notre exemple et donc 6 minutes après avoir débuté le procédé, nous injectons de la même façon une troisième partie du mélange à séparer. Cette injection a toujours lieu au même point (I) que précédemment.

Ces injections sont ainsi de suite répétées avec la même périodicité de 3 minutes (protocole 1 : A est fixe au cours du temps) jusqu'à l'épuisement du mélange à séparer. L'injection se fait toujours au même endroit et les conditions de solvant, température, flux ou autres facteurs habituellement modifiés ne sont pas changées.

Il est à noter qu'au temps t = 42 mn la colonne contient 14 fractions du mélange à séparer en cours de migration.

Sur la figure sont représentées les positions de ces fractions de produit d'intérêt en cours de migration dans la colonne : numérotées de 1 à 14.

A partir de la 44^{ème} minute, le temps de rétention du produit d'intérêt, celui-ci va être élué toutes les 3 minutes. La figure 9 représente la superposition des trois premiers chromatogrammes du mélange co-migrant dans la même colonne avec un décalage de 3 minutes (période A imposée par le protocole 1), la courbe en trait gras représente le chromatogramme obtenu par l'injection du premier quantième de mélange. La courbe en pointillés représente le chromatogramme décalé de 3 minutes, celui-ci correspond à l'injection du second quantième de mélange et la courbe en trait continu représente le chromatogramme correspondant à l'injection du troisième quantième de mélange à séparer.

Le dispositif de récupération de l'éluat permet de récupérer l'éluat de la colonne toutes les 3 minutes à partir du temps de rétention du produit d'intérêt. Il s'agit d'un dispositif de recueil des fractions qui soutire selon le même protocole que celui suivi par les injections, ici, aux temps tr, tr + 3 mn, tr + 2x3 mn, tr + 3x3 mn jusqu'à tr + nx3 mn la fraction d'intérêt. En dehors de ces périodes où le dispositif récupère la fraction d'intérêt, le flux de solvant est orienté vers une cuve de récupération des éluats non valorisables.

(S1), (S2) et (S3) (figure 9) représentent les périodes de soutirage de la fraction d'intérêt, elles interviennent toutes les A minutes et donc ici, toutes les 3 minutes, ici majoritairement Y1.

Les impuretés Y2 et Y3 qui ont des différences de temps de rétention avec le produit d'intérêt qui ne sont pas des multiples entiers de 3 minutes (la fréquence d'injection), ne sont pas soutirées lors des séquences (S) de soutirage.

On constate cependant que l'impureté Y1 se retrouve co-éluée avec le produit d'intérêt dans la mesure où son temps de rétention est celui du produit d'intérêt X moins A = 3 mn (44 mn - 3 mn = 41 mn).

Le recueil des fractions d'intérêt conduit à la formation d'un mélange contenant le produit d'intérêt avec les impuretés ayant une différence de temps de rétention avec le produit d'intérêt multiple entier de 3 minutes.

Dans notre exemple l'éluat récupéré contient :
- le produit X injecté lors de t0,
- le produit X injecté lors de t1 et les impuretés provenant de la première injection ayant un tr = 44 +/- 3 minutes
- le produit X injecté lors de t2, les impuretés provenant de la première injection ayant un tr = 44 + 6 minutes et les impuretés provenant de la première injection ayant un tr = 44 + 3 minutes,...
- Et ainsi de suite.
Où t1 = t0 + 3 mn, t2 = t0 + 6mn,... tn = t0 + n3 mn.

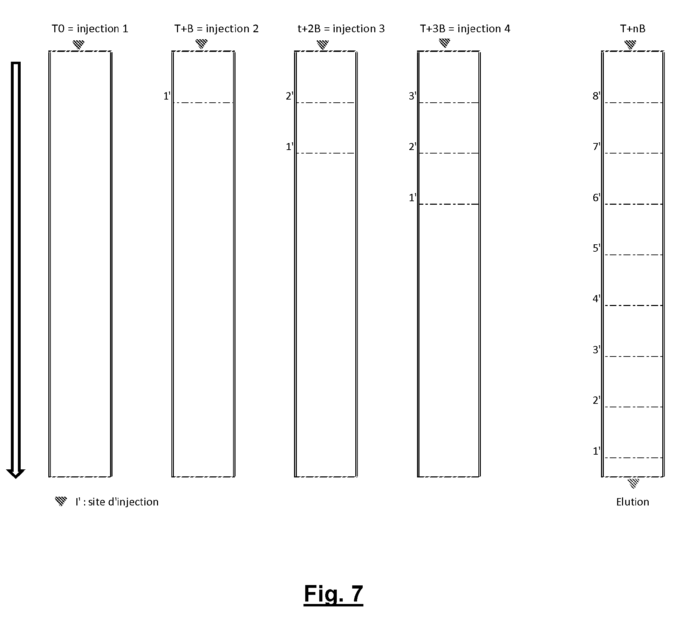

En réinjectant ce mélange et en modifiant les intervalles d'injection et de recueil (B est fixé à 5 minutes et constant dans notre exemple : c'est le protocole 2) dans une seconde partie du dispositif, il est possible d'éliminer ces impuretés : figure 7.

Phase 2 (représentée en figure 7) : au temps T0, une partie du mélange précédemment obtenue est injectée au point (I') de la colonne dont le flux de solvant est symbolisé par la flèche verticale de gauche.

Au temps T0 + B, soit 5 minutes plus tard dans notre exemple, nous injectons de la même façon une seconde partie du mélange obtenue en fin de phase 1. Cette injection a lieu au même point (I') que précédemment.

Au temps T0 + 2B, soit encore 5 minutes plus tard dans notre exemple et donc 10 minutes après avoir débuté le procédé, nous injectons de la même façon une troisième partie du mélange à séparer. Cette injection a toujours lieu au même point (I') que précédemment.

Ces injections sont ainsi de suite répétées avec la même périodicité de 5 minutes jusqu'à l'épuisement du mélange obtenu en fin de phase 1. L'injection se fait toujours au même endroit et les conditions de solvant, température, flux ou autres facteurs habituellement modifiés ne sont pas changés.

Il est à noter qu'au temps T = 42 minutes la colonne contient 8 fractions du mélange à séparer en cours de migration.

Sur la figure sont représentées les positions, numérotées de (1') à (8'), de ces fractions de produit d'intérêt en cours de migration dans la colonne.

A partir de la 44^{ème} minute, le produit d'intérêt est élué toutes les 5 minutes (le temps de rétention tr est effectivement, dans notre exemple, le même que précédemment dans la mesure où nous avons choisi de conserver la même colonne).

Le dispositif de récupération de l'éluat (semblable au précédent) permet de récupérer l'éluat de la colonne en respectant le protocole 2, soit, toutes les 5 minutes à partir du temps de rétention du produit d'intérêt. Il s'agit d'un dispositif qui respecte le protocole 2 (B est fixe au cours du temps) de recueil des fractions qui soutire aux temps tr, tr + 5mn, tr + 2x5 mn, tr + 3x5 mn jusqu'à tr + nx5 mn la fraction d'intérêt. En dehors de ces périodes où le dispositif récupère la fraction d'intérêt, le flux de solvant est orienté vers une cuve de récupération des éluats non valorisables.

Ce recueil des fractions d'intérêt conduit à la formation d'une fraction hautement purifiée en produit d'intérêt.

Effectivement les impuretés co-éluant avec le produit d'intérêt pendant la première phase avec un tr d'un multiple de 3 minutes ne sont plus, dans la seconde phase récupérées en même temps que le produit d'intérêt puisque celui-ci est élué toutes les 5 minutes. Ainsi l'impureté Y1 migrant avec un tr de 41 minutes, est éluée à 41 mn, puis 46 mn, 51 mn, 56 mn... Alors que le produit d'intérêt X est recueilli à 44 minutes puis 49 mn, 54 mn, 59 mn.

Le recueil des fractions d'intérêt conduit à l'obtention du produit purifié.

Seules peuvent persister les potentielles impuretés ayant un temps de rétention = tr du produit d'intérêt +/- nx3x5 minutes, soit les impuretés migrant avec un tr de 44 +/- 15 minutes, 44 +/- 30 minutes,...

Dans notre exemple aucune impureté ne migre à ces temps de rétention, une étape supplémentaire de ce procédé avec un intervalle d'injection de 7 minutes, par exemple, les auraient néanmoins éliminées.

On constate dans cet exemple qu'en deux phases il est possible de faire migrer 8 fois plus de mélange à séparer dans la colonne à un même instant que ce qu'elle pourrait classiquement supporter.

## Revendications

1. Un procédé de séparation de fractions d'un mélange à séparer par chromatographie liquide comprenant les étapes de :
- Injections multiples du mélange à séparer : les injections se succèdent après des intervalles de temps A dans une colonne de chromatographie,
- soutirages multiples : le soutirage des fractions de cette colonne se succèdent après des intervalles de temps A, générant un éluat enrichi en fraction d'intérêt, formé à partir d'au moins une desdites fractions soutirées,
- injections multiples de l'éluat recueilli précédemment : les injections se succèdent après des intervalles de temps B dans une seconde colonne de chromatographie,
- soutirages multiples : le soutirage des fractions de cette seconde colonne se succèdent après des intervalles de temps B.

2. Le procédé de séparation selon la revendication 1 dans lequel les injections faites dans une colonne peuvent intervenir avant les premières élutions des fractions d'intérêt de cette même colonne.

3. Le procédé de séparation selon l'une des revendications 1 ou 2 dans lequel les injections faites dans une colonne peuvent intervenir sans qu'une séparation ne soit obtenue avec les chromatogrammes issus d'injections précédentes.

4. Le procédé de séparation selon l'une des revendications 1, 2 ou 3 dans lequel A et/ou B sont fixes au cours du temps.

5. Le procédé de séparation selon l'une des revendications 1 à 3 dans lequel A et/ou B varient au cours du temps.

6. Le procédé de séparation selon l'une des revendications 1 à 5 dans lequel A et/ou B sont déterminées pour ne pas être des multiples entiers l'un de l'autre.

7. Le procédé de séparation selon l'une des revendications 1 à 6 dans lequel la seconde colonne est la même que la première.

8. Le procédé de séparation selon l'une des revendications 1 à 7 comprenant une étape de concentration de l'éluat généré avant de procéder aux étapes d'injections multiples dans ladite seconde colonne de chromatographie.

9. Le procédé de séparation selon l'une des revendications 1 à 8 dans lequel les systèmes éluants mis en jeu dans la seconde colonne sont différents de ceux mis en jeu dans la première.

10. Le procédé de séparation selon l'une des revendications 1 à 9 dans lequel l'injection du mélange à séparer est cyclique.

11. Le procédé de séparation selon l'une des revendications 1 à 10 dans lequel le produit d'intérêt est celui à éliminer d'un mélange.

12. Le procédé de séparation selon l'une des revendications 1 à 11 dans lequel les colonnes sont remplacées par un ou des montages de plusieurs colonnes.

13. Le procédé de séparation selon l'une des revendications 1 à 12 dans lequel un détecteur est ajouté en parallèle ou en série avec le dispositif de soutirage.

14. Le procédé de séparation selon l'une des revendications 1 à 13 dans lequel la section de la seconde colonne approche un multiple remarquable de la section de la première colonne.

15. Dispositif de séparation de fractions de mélange pour la mise en oeuvre du procédé selon la revendication 1, **caractérisé en ce qu'**il comprend :
- une première (C1) et une seconde (C2) colonne de chromatographie, ladite seconde colonne (C2) pouvant être la même que la première colonne (C1) ;
- des moyens de soutirage et de recueil (S1) d'une pluralité de fractions de ladite première colonne de chromatographie (C1), à intervalles de temps contrôlés A et des moyens de soutirage et de recueil (S2) d'une pluralité de fractions de ladite seconde colonne de chromatographie (C2), à intervalles de temps contrôlés B ;
- des moyens d'injection (11) dans ladite première colonne de chromatographie (C1) d'un mélange à intervalles de temps contrôlés A, et des moyens d'injection (12) dans ladite seconde colonne (C2) d'un éluat à intervalles de temps contrôlés B, ledit éluat étant formé à partir d'au moins une desdites fractions soutirées de ladite première colonne (C1) ;
- des moyens de transfert desdites fractions soutirées desdits moyens de soutirage et de recueil (S1) d'une pluralité de fractions de ladite première colonne de chromatographie (C1) vers lesdits moyens d'injection (12) dans ladite seconde colonne (C2) ;
- un collecteur des fractions non valorisables (G) ;
- des moyens de commande automatique desdits moyens d'injection (I1;I2) et desdits moyens de soutirage et de recueil (S1; S2).

## Patentansprüche

1. Ein Verfahren zum Trennen von Fraktionen einer durch Flüssigchromatographie zu trennenden Mischung, das die folgenden Schritte aufweist:
- Mehrfacheinspritzungen der zu trennenden Mischung: die Einspritzungen folgen einander nach Zeitintervallen A in eine Chromatographiesäule,
- Mehrfachentnahmen: die Entnahmen der Fraktionen aus dieser Säule folgen einander nach Zeitintervallen A, wodurch ein Eluat erzeugt wird, das an Fraktionen von Interesse angereichert ist, das ausgehend von mindestens einer der entnommenen Fraktionen gebildet wird,
- Mehrfacheinspritzungen des zuvor gesammelten Eluats: die Einspritzungen folgen einander nach Zeitintervallen B in eine zweite Chromatographiesäule,
- Mehrfachentnahmen: die Entnahmen der Fraktionen aus dieser zweiten Säule folgen einander nach Zeitintervallen B.

2. Das Verfahren zum Trennen nach Anspruch 1, wobei die Einspritzungen, die in eine Säule gemacht werden, vor den ersten Eluationen der Fraktionen von Interesse von dieser gleichen Säule vorgenommen werden können.

3. Das Verfahren zum Trennen nach einem der Ansprüche 1 oder 2, wobei die Einspritzungen, die in eine Säule gemacht werden, vorgenommen werden können, ohne dass eine Trennung mit den Chromatogrammen, die aus vorherigen Einspritzungen hervorgegangen sind, erhalten wird.

4. Das Verfahren zum Trennen nach einem der Ansprüche 1, 2 oder 3, wobei A und/oder B im Laufe der Zeit fest sind.

5. Das Verfahren zum Trennen nach einem der Ansprüche 1 bis 3, wobei A und/oder B im Laufe der Zeit variieren.

6. Das Verfahren zum Trennen nach einem der Ansprüche 1 bis 5, wobei A und/oder B bestimmt werden, um keine ganzzahligen Vielfachen voneinander zu sein.

7. Das Verfahren zum Trennen nach einem der Ansprüche 1 bis 6, wobei die zweite Säule die gleiche wie die erste ist.

8. Das Verfahren zum Trennen nach einem der Ansprüche 1 bis 7, umfassend einen Schritt des Konzentrieren des Eluats, das erzeugt wird, bevor die Schritte der Mehrfacheinspritzungen in die zweite Chromatographiesäule durchgeführt werden.

9. Das Verfahren zum Trennen nach einem der Ansprüche 1 bis 8, wobei sich die Eluationssysteme, die in der zweiten Säule eingesetzt werden, von jenen unterscheiden, die in der ersten eingesetzt werden.

10. Das Verfahren zum Trennen nach einem der Ansprüche 1 bis 9, wobei das Einspritzen der zu trennenden Mischung zyklisch ist.

11. Das Verfahren zum Trennen nach einem der Ansprüche 1 bis 10, wobei das Produkt von Interesse jenes ist, das aus einer Mischung zu eliminieren ist.

12. Das Verfahren zum Trennen nach einem der Ansprüche 1 bis 11, wobei die Säulen durch eine Anordnung oder Anordnungen von mehreren Säulen ersetzt werden.

13. Das Verfahren zum Trennen nach einem der Ansprüche 1 bis 12, wobei ein Detektor parallel zu oder in Reihe mit der Entnahmevorrichtung hinzugefügt wird.

14. Das Verfahren zum Trennen nach einem der Ansprüche 1 bis 13, wobei sich der Abschnitt der zweiten Säule einem beachtlichen Vielfachen des Abschnitts der ersten Säule nähert.

15. Vorrichtung zum Trennen von Mischungsfraktionen zum Umzusetzen des Verfahrens nach Anspruch 1, **dadurch gekennzeichnet, dass** es Folgendes aufweist:
- eine erste (C1) und eine zweite (C2) Chromatographiesäule, wobei die zweite Säule (C2) die gleiche wie die erste Säule (C1) sein kann;
- Mittel zum Entnehmen und zum Sammeln (S1) von mehreren Fraktionen aus der ersten Chromatographiesäule (C1) in kontrollierten Zeitintervallen A und Mittel zum Entnehmen und zum Sammeln (S2) von mehreren Fraktionen aus der zweiten Chromatographiesäule (C2) in kontrollierten Zeitintervallen B;
- Mittel zum Einspritzen (I1) in die erste Chromatographiesäule (C1) einer Mischung in kontrollierten Zeitintervallen A und Mittel zum Einspritzen (12) in die zweite Chromatographiesäule (C2) eines Eluats in kontrollierten Zeitintervallen B, wobei das Eluat ausgehend von mindestens einer der Fraktionen gebildet wird, die aus der ersten Säule (C1) entnommen werden;
- Mittel zum Übertragen der Fraktionen, die von den Mitteln zum Entnehmen und zum Sammeln (S1) aus mehreren Fraktionen aus der ersten Chromatographiesäule (C1) entnommen werden, zu den Mitteln zum Einspritzen (12) in die zweite Säule (C2);
- einen Sammler der nicht verwertbaren Fraktionen (G) ;
- Mittel zum automatischen Steuern der Mittel zum Einspritzen (I1; 12) und der Mittel zum Entnehmen und zum Sammeln (I1; 12).

## Claims

1. A method for separating fractions of a mixture to be separated by liquid chromatography, comprising the steps of :
- multiple injections of the mixture to be separated: the injections are made successively into a chromatography column after time intervals A,
- multiple collecting operations: the fractions of said column are collected successively after time intervals A, generating an eluate enriched with the fraction of interest, which is created from at least one of said collected fractions,
- multiple injections of the eluate collected in the preceding: the injections are carried out successively after time intervals B into a second chromatography column,
- multiple collecting operations: the fractions from said second column are collected successively after time intervals B.

2. The separation method according to claim 1, wherein the injections into a column may be made before the first elutions of the fractions of interest from the same column.

3. The separation method according to either of claims 1 or 2, wherein the injections into a column may be made without obtaining separation with the chromatograms resulting from preceding injections.

4. The separation method according to any of claims 1, 2 or 3, wherein A and/or B remains constant over time.

5. The separation method according to any of claims 1 to 3, wherein A and/or B vary over time.

6. The separation method according to any of claims 1 to 5, wherein A and/or B are determined such that they are not integer multiples of one another.

7. The separation method according to any of claims 1 to 6, wherein the second column is the same as the first column.

8. The separation method according to any of claims 1 to 7, comprising a step of concentrating the generated eluate before continuing to the steps of multiple injections into said second chromatography column.

9. The separation method according to any of claims 1 to 8, wherein the elution systems employed in the second column are different from those used in the first column.

10. The separation method according to any of claims 1 to 9, wherein the injection of the mixture to be separated is cyclical.

11. The separation method according to any of claims 1 to 10, wherein the product of interest is the product that is to be eliminated from a mixture.

12. The separation method according to any of claims 1 to 11, wherein the columns are replaced by one or more assemblies of multiple columns.

13. The separation method according to any of claims 1 to 12, wherein a detector is added in parallel or in series with the collecting device.

14. The separation method according to any of claims 1 to 13, wherein the cross section of the second column is approximately equal to a significant multiple of the cross section of the first column.

15. A device for separating fractions of a mixture intended for performing the method according to claim 1, **characterised in that** it comprises :
- a first (C1) and a second (C2) chromatography column, said second column (C2) might be the same as the first column (C1);
- means for collecting (S1) a plurality of fractions from said first chromatography column (C1), at controlled time intervals A and means for collecting (S2) a plurality of fractions from said second chromatography column (C2), at controlled time intervals B;
- means for injecting (I1) a mixture into said first chromatography column (C1) at controlled time intervals A and means for injecting (12) an eluate into said second column (C2) at controlled time intervals B, said eluate being formed from at least one of said collected fractions from said first column (C1);
- means for transferring said collected fractions from said collecting means and means for collecting (S1) said plurality of fractions from said first chromatography column (C1) to said injection (12) means into said second column (C2);
- a collector of non-recoverable fractions (G);
- means for automatically controlling said injection means (I1; I2) and said collecting means (S1; S2).
